# EUROPEAN PATENT SPECIFICATION

(11) **EP 2 389 032 B1**
(45) Date of publication and mention of the grant of the patent: **10.12.2014**
(21) Application number: 10731071.6
(22) Date of filing: 19.01.2010
(51) Int. Cl.: H04W 36/00, H04W 84/04

(54) **REALIZATION METHOD AND RELATED DEVICE FOR SWITCHING CONTROL**
AUSFÜHRUNGSVERFAHREN UND ZUGEHÖRIGE VORRICHTUNG FÜR SCHALTSTEUERUNG
PROCÉDÉ DE RÉALISATION ET DISPOSITIF ASSOCIÉ PERMETTANT UNE COMMANDE DE COMMUTATION

(30) Priority: 19.01.2009 CN 200910003076
(43) Date of publication of application: 23.11.2011
(60) Divisional application: 14155677.9
(73) Proprietor: Huawei Technologies Co., Ltd., Shenzhen, Guangdong 518129 (CN)
(72) Inventor: WANG, Haining, Shenzhen (CN); GUO, Yali, Shenzhen (CN); LIU, Hai, Shenzhen (CN)
(74) Representative: Kreuz, Georg Maria
(86) International application number: PCT/CN2010/070258
(87) International publication number: WO 2010/081437

(56) References cited:
- WO-A2-2008/112161
- WO-A2-2010/075474
- CN-A- 101 312 593
- CN-A- 101 365 231
- CN-A- 101 600 237
- US-A1- 2008 267 153
- ZTE: "HNB/HeNB Access Control in handover procedure", 3GPP DRAFT; S2-090734_S2_70_HENB ACCESS CONTROL IN HANDOVER_REV FROM 0150, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Phoenix; 20090116, 16 January 2009 (2009-01-16), XP050333172, [retrieved on 2009-01-16]
- "3rd Generation Partnership Project; Technical Specification Group Services and System Aspects; Architecture aspects of Home NodeB and Home eNodeB (Release 9)", 3GPP STANDARD; 3GPP TR 23.830, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.2.1, 1 January 2009 (2009-01-01), pages 1-23, XP050363897,
- QUALCOMM EUROPE: "Support for Hybrid and Open access mode H(e)NBs", 3GPP DRAFT; S2-090130, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Phoenix; 20090107, 7 January 2009 (2009-01-07), XP050332722, [retrieved on 2009-01-07]
- QUALCOMM EUROPE: "Principles of Access Control for CSG Cells", 3GPP DRAFT; C1_083100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Budapest, Hungary; 20080811, 11 August 2008 (2008-08-11), XP050308778, [retrieved on 2008-08-11]
- HUAWEI ET AL: "CSG access control for H(e)NB", 3GPP DRAFT; S2-090789_CSG ACCESS CONTROL FOR H(E)NB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Phoenix; 20090116, 16 January 2009 (2009-01-16), XP050333217, [retrieved on 2009-01-16]
- NOKIA SIEMENS NETWORKS ET AL: "Access control for handover procedures to LTE CSG/hybrid cells", 3GPP DRAFT; R3-092645_ACCCNTR_STAGE2_LTE_CR_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050392116, [retrieved on 2009-10-15]

## Description

### FIELD OF THE INVENTION

The present invention relates to the field of communication technologies, and in particular, to a method for implementing handover control, a related apparatus, hardware and computer readable storage medium.

### BACKGROUD OF THE INVENTION

With the development of mobile communication technologies, a variety of user requirements appear. To satisfy the variety of user requirements, home base stations for indoor coverage, enterprise class base stations for inside coverage, and other private networks emerge. In the scenario of the private network (Private Network), from the point of a user access right limited by the network, access modes are classified into a closed mode and a non-closed mode. In the closed mode, only certain subscribed users can be allowed to access the network and initiate services. The non-closed mode can be classified into an open mode and a hybrid mode. The open mode can be viewed as the access mode being the same as that in a public cell, that is, the users not subscribed to the private network are allowed to access the network and initiate services. In the hybrid mode, the private network can be used in the closed mode and the open mode at the same time, that is, the private network can be used for certain subscribed users in the closed mode and for other users in the open mode. But compared with the other users, the subscribed users may enjoy a more favorable charging policy and service of higher quality.

A communication system can be classified into an access network and a core network. The core network is mainly responsible for mobility management, session management, security management, and policy and charging management from a terminal to the network. The access network is mainly responsible for wireless resource management. A base station in the access network communicates with the terminal through an air interface. The base stations can be classified into macro base stations, micro base stations, and home base stations according to such factors as coverage areas of signals, the number of users that can be accommodated, and deployment scenarios. The home base station is generally owned by an individual or a group, and deployed as a dedicated resource in home, an organization, a company, or a school, so as to provide certain users with services.

The home base station can control access of family members to a closed subscriber group (CSG, Closed Subscriber Group) cell through a CSG. A subscribed user of the CSG can access the network and initiate services through any base station serving the CSG in the closed mode. The user who does not belong to the CSG has no right to initiate services through the base station serving the CSG in the closed mode. Different CSGs can be distinguished by using different CSG identities (CSG ID). A CSG list accessible to the user is used to record a CSG ID of a cell accessible to the user. A mobility management entity (MME, Mobility Management Entity) of the core network can save the CSG list accessible to the user.

According to a handover process in the prior art, the terminal may be handed over by mistake, and charging loss of an operator may be caused. If the terminal is handed over to the CSG cell that the terminal has no right to access and initiates a second service in the CSG cell, the user experience may be affected greatly.

Document D1 is "HNB/HeNB Access Control in handover procedure", 3GPP DRAFT; S2-090734_S2_70_HENB ACCESS CONTROL IN HANDOVER_REV FROM 0150, 3RD GENERATION PARTNERSHIP PROJECT (3GPP), MOBILE COMPETENCE CENTRE. The Document D1 discloses that Core Network elements (MME/SGSN/MSC) performs the access control during the in-bound handover to HNB/HeNB. The Source NB/eNB/HNB/HeNB sends the target CSG ID and access control mode of the target HNB/HeNB to the Core Network in the handover request, and the Core Network performs access control based on the UE allowed CSG list as the same as the normal attach procedure. If the access control fails the Core Network shall return an error cause to the source NB/eNB/HNB/HeNB to indicate the reason why the handover failed (e.g. the target CSG id is not in the UE allowed CSG list). The source NB/eNB/HNB/HeNB may select another target cell and send handover request again.

### SUMMARY OF THE INVENTION

The present invention provides a method for implementing handover control, a related device, and a communication system. An MME performs access control on cell handover of a terminal according to a CSG access control rule, so that the terminal can be handed over to a target cell that the terminal has the right to access as far as possible.

To achieve the objective of the present invention, the present invention is implemented by using the following technical solutions as defined in the independent claims. Further embodiments are defined in the dependent claims.

It can be seen that, the technical solutions adopted by the present invention can bring the following benefits: when the terminal performs cell handover, the MME performs the access control on the terminal according to the access mode and/or CSG ID of the target cell, so that the terminal can be handed over to the target cell as effectively as possible that the terminal has the right to access, charging loss of an operator can be avoided as far as possible, and the terminal can initiate a second service in the target cell after being handed over to the target cell.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention.

Also disclosed are examples useful for understanding the embodiments of the present invention. Said examples, per se, are not part of the present invention.
FIG. 1 is a schematic flowchart of a method for implementing handover control according to Example 1;
FIG. 2 is a schematic flowchart of a method for implementing handover control according to Embodiment 1 of the present invention;
FIG. 3 is a schematic flowchart of a method for implementing handover control according to Embodiment 2 of the present invention;
FIG. 4 is a schematic flowchart of a method for implementing handover control according to Example 2;
FIG. 5 is a schematic flowchart of a method for implementing handover control according to Example 3;
FIG. 6 is a schematic flowchart of a method for implementing handover control according to Example 4;
FIG. 7 is a schematic flowchart of a method for implementing handover control according to Example 5;
FIG. 8 is a schematic diagram of an MME according to Example 6;
FIG. 9 is a schematic diagram of an MME according to Example 7;
FIG. 10 is a schematic diagram of an MME according to Example 8; and
FIG. 11 is a schematic diagram of an access network device according to Embodiment 3 of the present invention.

### DETAILED DESCRIPTION OF THE EMBODIMENTS

The embodiments of the present invention are directed to the problem of a possible ineffective handover caused in the case that an access right is not controlled during the handover of a terminal, and provide a method for implementing handover control, a related apparatus, a computer readable storage medium, and a handware as defined in the claims. When the terminal performs cell handover, an MME performs access control on the terminal handover according to a CSG access control rule, so that the terminal can be handed over to a target cell as effectively as possible that the terminal has the right to access.

The specific embodiments are described in the following in detail.

In the following embodiments, a source base station may be a home base station or an ordinary base station, a target base station may be a home base station, and a target cell may be a CSG cell. In the case that the MME needs to be relocated, a source MME and a target MME are different entities. In the case that the MME does not need to be relocated, the source MME and the target MME are the same entity, and messages interacted between the source MME and the target MME are omitted.

In the following embodiments, a handover required message may be a Handover Required message, a forward relocation request message may be a Forward Relocation Request message, a forward relocation response message may be a Forward Relocation Response message, a handover request message may be a Handover Request message, a handover request acknowledge message may be a Handover Request Acknowledge message, a handover preparation failure message may be a Handover Preparation Failure message, a handover command message may be a Handover Command message, a handover confirm message may be a Handover Confirm message, a handover failure message may be a Handover Failure message, a relocation cancel request message may be a Relocation Cancel Request message, and a relocation cancel response message may be a Relocation Cancel Response message.

In the following embodiments, access control information may be a CSG ID of the target cell and/or an access mode of the target cell.

### Example 1

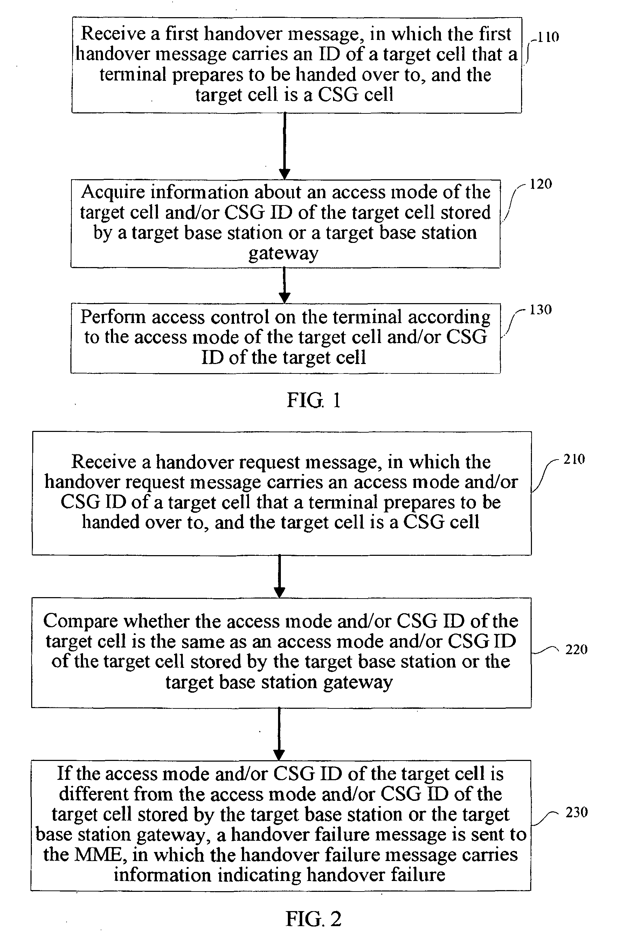

Referring to FIG. 1, a schematic flowchart of a method for implementing handover control according to Example 1 is provided. The method includes the following steps.

Step 110: Receive a first handover message, in which the first handover message carries an ID of a target cell that a terminal prepares to be handed over to, and the target cell is a CSG cell.

The first handover message may be a handover required message or a forward relocation request message.

Step 120: Acquire information about an access mode of a target cell and/or CSG ID of the target cell stored by a target base station or a target base station gateway.

An MME can acquire the information about the access mode of the target cell and/or CSG ID of the target cell stored by the target base station or the target base station gateway by any means, for example, by using commands in a handover process in the prior art or dedicated messages.

Step 130: Perform access control on the terminal according to the access mode of the target cell and/or CSG ID of the target cell.

During the handover of the terminal, the MME performs the access control on the terminal according to the access mode of the target cell and/or CSG ID of the target cell and a CSG access control rule. If the terminal has the right to access the target cell, the handover of the terminal is allowed. If the terminal has no right to access the target cell, the handover process can be terminated.

It can be seen that, in this example, when the terminal performs cell handover, the MME performs the access control on the terminal according to the access mode of the target cell and/or CSG ID of the target cell stored by the target base station or the target base station gateway, so that the terminal can be effectively handed over to the target cell that the terminal has the right to access, charging loss of an operator can be avoided as far as possible, and the terminal can initiate a second service in the target cell after being handed over to the target cell.

### Embodiment 1

Referring to FIG. 2, a schematic flowchart of a method for implementing handover control according to Embodiment 1 of the present invention is provided. The method includes the following steps.

Step 210: Receive a handover request message, in which the handover request message carries an access mode of a target cell and/or CSG ID of the target cell that a terminal prepares to be handed over to, and the target cell is a CSG cell.

The handover request message may be sent by an MME and received by a target base station or a target base station gateway.

Step 220: Compare whether the access mode of the target cell and/or CSG ID of the target cell is the same as an access mode of the target cell and/or CSG ID of the target cell stored by the target base station or the target base station gateway.

Step 230: If the access mode of the target cell and/or CSG ID of the target cell is different from the access mode of the target cell and/or CSG ID of the target cell stored by the target base station or the target base station gateway, a handover failure message is sent to the MME, in which the handover failure message carries information indicating handover failure.

It can be seen that, in this embodiment, when the terminal performs cell handover, the target base station or the target base station gateway performs authenticity verification on access control information reported by a source base station, a source base station gateway, or the terminal, so that the terminal can be handed over to the target cell as effectively as possible that the terminal has the right to access, charging loss of an operator can be avoided as far as possible, and the terminal can initiate a second service in the target cell after being handed over to the target cell.

### Embodiment 2

This embodiment is a comprehensive embodiment. In this embodiment, a UE actively reports an access mode of a target cell and/or CSG ID of the target cell by using a measurement report, and an MME performs access control on the UE according to the access mode of the target cell and/or CSG ID of the target cell reported by the UE.

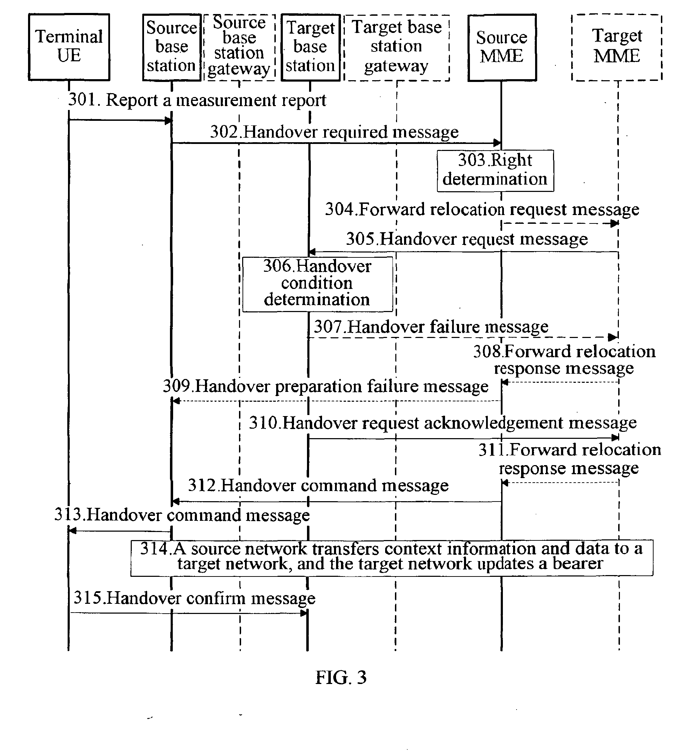

Referring to FIG. 3, a schematic flowchart of a method for implementing handover control according to Embodiment 2 of the present invention is provided. The method includes the following steps.

Step 301: The UE reports the measurement report to a source base station.

If reporting condition of a measurement report is satisfied, the UE sends the measurement report to the source base station, in which the measurement report includes a measurement result. The measurement result may include ID information of the measured target cell and values of various parameters measuring signal quality. The UE can report the measurement report periodically and/or at the time when the quality of current cell signals decreases apparently. The present invention is not limited thereto.

The ID of the target cell may be a Physical Cell Identity (Physical Cell Identity), a Global Cell Identity (Global Cell Identity), or a Cell Identity (Cell Identity) of the target cell. Because the target cell is a CSG cell, the measurement result may further include access control information such as the CSG ID of the target cell and/or the access mode of the target cell. The UE can acquire the access control information from a cell broadcast message.

Step 302: The source base station sends a handover required message to a source MME.

The handover required message may carry the following information: a handover type (such as, from an ordinary cell to a CSG cell or from a CSG cell to another CSG cell), a handover reason (such as, that based on resource optimization and load balance), a target ID, a transparent container from the source base station to a target base station, and the access mode of the target cell and/or CSG ID of the target cell reported by the UE. The target ID may be a target base station ID. The transparent container may include information such as a target cell ID.

Step 303: The source MME determines whether the UE has the right to access the target cell.

In the normal situation, a mobility management context of the UE is stored in the source MME. The mobility management context of the UE includes a CSG list accessible to the UE. It can be considered that, the UE is allowed to access the CSG cell corresponding to each CSG ID recorded in the CSG list and initiate services in the CSG cell.

According to a CSG access control rule, if the source MME detects that the access mode of the target cell reported by the UE is a closed mode, the source MME further detects whether the CSG list accessible to the UE has a record matching the CSG ID of the target cell reported by the UE. If the CSG list accessible to the UE has the record matching the CSG ID of the target cell reported by the UE, it can be considered that the UE has the right to access the target cell, and a handover process continues. If the CSG list accessible to the UE has no record matching the CSG ID of the target cell reported by the UE, it can be considered that the UE has no right to access the target cell, the source MME can send a handover preparation failure message to the source base station directly, in which the handover preparation failure message may carry information such as a handover failure reason. This handover process ends. After receiving the handover preparation failure message, the source base station can reselect a target cell for the UE and start the handover process again.

If the source MME detects that the access mode of the target cell reported by the UE is a non-closed mode (for example, an open mode or a hybrid mode), the normal handover process is performed, that is, the handover process identical to the process of the handover to the ordinary cell is performed.

Preferably, if the access mode of the target cell reported by the UE through the measurement report is the open mode, the handover required message may not carry the information about the access mode and the CSG ID of the target cell or only carry the information about the access mode of the target cell. The present invention is not limited thereto. The source MME can determine that the access mode of the target cell is the open mode by adopting a default method.

Moreover, if the MME needs to be relocated, the procedure proceeds to step 304. If the MME does not need to be relocated, the source MME and a target MME in the following are the same entity, messages interacted between the source MME and the target MME are omitted, and the procedure proceeds to step 305.

Step 304: The source MME sends a forward relocation request message to the target MME.

The forward relocation request message may carry the following information: the mobility management context of the UE, the access mode of the target cell and/or CSG ID of the target cell, the transparent container from the source base station to the target base station, and the target base station ID.

Optionally, if the MME needs to be relocated, in step 303, the source MME may not determine whether the UE has the right to access the target cell. In this step, the target MME determines whether the terminal has the right to access the target cell according to the CSG access control rule, and if the terminal has the right to access the target cell, the handover process continues; if the terminal has no right to access the target cell, it can be considered that the UE has no right to access the target cell, and the source base station can be informed of the handover failure reason. This handover process is terminated.

Step 305, the target MME sends a handover request message to the target base station.

The handover request message may include the handover type, the handover reason, a bearer list required to be established, the transparent container from the source base station to the target base station, and the access mode of the target cell and/or CSG ID of the target cell.

Step 306: The target base station determines whether the UE satisfies a handover condition.

Preferably, the target base station can further verify authenticity of the access mode of the target cell and/or CSG ID of the target cell reported by a terminal. For example, the access mode the target cell and the CSG ID of the target cell are stored in the target base station, and the target base station can compare the received access mode of the target cell and/or CSG ID of the target cell with the corresponding information stored in the target base station.

Optionally, if a target base station gateway exists and the information about the access mode and the CSG ID of the target cell is stored in the target base station gateway, the target base station gateway can also verify the authenticity of the access control information reported by the UE.

If a comparison result is that the received access mode of the target cell and/or CSG ID of the target cell is different from the corresponding information stored in the target base station, it indicates that the access control information reported by the UE is inauthentic, and the procedure proceeds to step 307.

If the comparison result is that the received access mode of the target cell and/or CSG ID of the target cell is the same as the corresponding information stored in the target base station, it indicates that the access control information reported by the UE is authentic, and the target base station can further determine whether the handover condition is satisfied, for example, whether current resources are adequate, according to a handover preparation rule. If the handover condition is not satisfied, the procedure proceeds to step 307. If the handover condition is satisfied, the procedure proceeds to step 310.

Step 307: The target base station sends a handover failure message to the target MME.

If the target base station finds that the access control information reported by the UE is inauthentic or the UE does not satisfy the handover condition currently, the target base station can send the handover failure message to the target MME. The handover failure message may carry the handover failure reason, such as the inauthentic access control information reported by the UE or inadequate resources.

Moreover, if the MME is relocated, the procedure proceeds to step 308. If the MME does not need to be relocated, the source MME and a target MME are the same entity, messages interacted between the source MME and the target MME are omitted, and the procedure proceeds to step 309.

Step 308: The target MME sends a forward relocation response message to the source MME.

If the target MME receives the handover failure message sent by the target base station, the forward relocation response message may carry the handover failure reason, and the procedure proceeds to step 309.

Step 309: The source MME sends the handover preparation failure message to the source base station.

The handover preparation failure message may carry the handover failure reason, and this handover process ends. After receiving the handover preparation failure message, the source base station can reselect a target cell for the UE and start the handover process again.

Step 310: The target base station sends a handover request acknowledge message to the target MME.

If it is determined that the handover condition is satisfied, the target base station prepares corresponding resources and can send the handover request acknowledge message to the target MME. The handover request acknowledge message may carry the following information: the handover type, the bearer list in which the bearer is established successfully, and the bearer list in which the bearer fails to be established.

Moreover, if the MME is relocated, the procedure proceeds to step 311. If the MME is not relocated, the source MME and a target MME are the same entity, messages interacted between the source MME and the target MME are omitted, and the procedure proceeds to step 312.

Step 311: The target MME sends the forward relocation response message to the source MME.

If the target MME receives the handover request acknowledge message sent by the target base station, the forward relocation response message may include the following information: the bearer list in which the bearer is established successfully and a transparent container from the target base station to the source base station.

Step 312: The source MME sends a handover command message to the source base station.

Step 313: The source base station sends the handover command message to the UE.

Step 314: A source network transfers context information and data to a target network, and the target network updates a bearer.

Step 315: The UE is synchronized to the target cell and sends a handover confirm message to the target base station.

If a location area ID of the target cell is not in a location area ID list saved by the UE, the UE can also initiate location area updating, for example, TAU (TAU, Tracking Area Update).

After the UE is handed over to the target cell successfully, the source network can delete the context of the UE and the temporary bearer.

It can be seen that, in this embodiment, when a terminal performs cell handover, the MME performs the access control on the terminal according to the access mode of the target cell and/or CSG ID of the target cell, so that the terminal can be handed over to the target cell that the terminal has the right to access, charging loss of an operator can be avoided, and the terminal can initiate a second service in the target cell after being handed over to the target cell.

Furthermore, the target base station or the target base station gateway verifies the authenticity of the access control information reported by the terminal, thereby further ensuring the effectiveness of the handover. The handover process is modified slightly and easier to be implemented.

### Example 2

This example is a comprehensive example. In this example, an MME acquires an access mode of a target cell and/or CSG ID of the target cell stored by a target base station or a target base station gateway, and performs access control on a UE according to the acquired access mode of the target cell and/or CSG ID of the target cell.

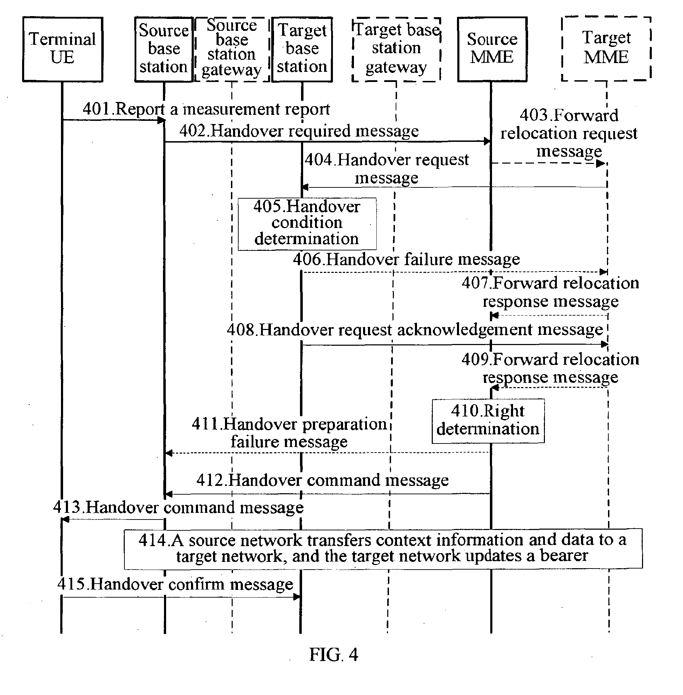

Referring to FIG. 4, a schematic flowchart of a method for implementing handover control according to Example 2 is provided. The method includes the following steps.

Step 401: The UE reports a measurement report to a source base station.

If a measurement report reporting condition is satisfied, the UE sends the measurement report to the source base station, in which the measurement report includes a measurement result. The measurement result may include ID information of the measured target cell and values of various parameters measuring signal quality.

Step 402: The source base station sends a handover required message to a source MME.

The handover required message may carry the following information: a handover type, a handover reason, a target ID, a transparent container from the source base station to the target base station, and a selected location area ID. The target ID may be a target base station ID. The transparent container may include information such as a target cell ID.

Moreover, if the MME needs to be relocated, the procedure proceeds to step 403. If the MME does not need to be relocated, the source MME and a target MME in the following are the same entity, messages interacted between the source MME and the target MME are omitted, and the procedure proceeds to step 404.

Step 403: The source MME sends a forward relocation request message to the target MME.

The forward relocation request message may carry the following information: a mobility management context of the UE, the transparent container from the source base station to the target base station, and the target base station ID.

Step 404: The target MME sends a handover request message to the target base station or the target base station gateway.

The handover request message may include the handover type, the handover reason, a bearer list required to be established, and the transparent container from the source base station to the target base station.

Step 405: The target base station determines whether the UE satisfies a handover condition.

The target base station determines whether the handover condition is satisfied, for example, whether current resources are adequate, according to a handover preparation rule. If the handover condition is not satisfied, the procedure proceeds to step 406. If the handover condition is satisfied, the procedure proceeds to step 408.

Step 406: The target base station sends a handover failure message to the target MME.

If the target base station determines that the UE does not satisfy the handover condition currently, the target base station can send the handover failure message to the target MME. The handover failure message may carry a handover failure reason, such as inadequate resources.

Moreover, if the MME is relocated, the procedure proceeds to step 407. If the MME is not relocated, the source MME and a target MME are the same entity, messages interacted between the source MME and the target MME are omitted, and the procedure proceeds to step 411.

Step 407: The target MME sends a forward relocation response message to the source MME.

If the target MME receives the handover failure message sent by the target base station, the forward relocation response message may carry the handover failure reason, and the procedure proceeds to step 411.

Step 408: The target base station sends a handover request acknowledge message to the target MME.

If it is determined that the handover condition is satisfied, the target base station prepares corresponding resources and can send the handover request acknowledge message to the target MME. The handover request acknowledge message may include the following information: the handover type, the bearer list that is established successfully, the bearer list that fails to be established, and the access mode of the target cell and/or CSG ID of the target cell.

Optionally, if the target base station gateway exists, the target base station gateway can also determine whether the UE satisfies the handover condition currently. The information about the access mode of the target cell and/or CSG ID of the target cell carried in the handover request acknowledge message can be added by the target base station and can also be added by the target base station gateway.

Moreover, if the MME is relocated, the procedure proceeds to step 409. If the MME is not relocated, the source MME and a target MME are the same entity, messages interacted between the source MME and the target MME are omitted, and the procedure proceeds to step 410.

Step 409: The target MME sends the forward relocation response message to the source MME.

If the target MME receives the handover request acknowledge message sent by the target base station, the forward relocation response message may carry the following information: the bearer list established successfully, a transparent container from the target base station to the source base station, and the information about the access mode of the target cell and/or CSG ID of the target cell.

Step 410: The source MME determines whether the UE has the right to access the target cell.

According to a CSG access control rule, if the source MME detects that the received access mode of the target cell is a closed mode, the source MME further detects whether a CSG list of the UE has a record matching the received CSG ID of the target cell. If the CSG list of the UE has no record matching the received CSG ID of the target cell, it can be considered that the UE has no right to access the target cell, the procedure proceeds to step 411. If the CSG list of the UE has the record matching the received CSG ID of the target cell, it can be considered that the UE has the right to access the target cell, and the procedure proceeds to step 412.

If the source MME detects that the access mode of the target cell reported by the UE is a non-closed mode (for example, an open mode or a hybrid mode), the procedure proceeds to step 412.

Optionally, if the MME is relocated, then in step 409, the target MME can also determine whether the UE has the right to access the target cell according to the CSG access control rule and inform the source MME of a determination result by using the forward relocation response message.

Step 411: The source MME sends the handover preparation failure message to the source base station.

The handover preparation failure message may carry the handover failure reason, and this handover process ends. After receiving the handover preparation failure message, the source base station can reselect a target cell for the UE and start the handover process again.

Step 412: The source MME sends a handover command message to the source base station.

Step 413: The source base station sends the handover command message to the UE.

Step 414: A source network transfers context information and data to a target network, and the target network updates a bearer.

Step 415: The UE is synchronized to the target cell and sends a handover confirm message to the target base station.

If a location area ID of the target cell is not in a location area ID list saved by the UE, the UE can also initiate location area updating, for example, TAU.

After the UE is handed over to the target cell successfully, the source network can delete the context of the UE and the temporary bearer.

It can be seen that, in this example, when a terminal performs cell handover, the MME performs the access control on the terminal according to the access mode of the target cell and/or CSG ID of the target cell, so that the terminal can be handed over to the target cell that the terminal has the right to access, charging loss of an operator can be avoided as far as possible, and the terminal can initiate a second service in the target cell after being handed over to the target cell.

Furthermore, access control information used for the MME to perform the access control is stored by the target base station or the target base station gateway. Therefore, the access control information is authentic and effective, thereby ensuring the effectiveness of the handover. The handover process is modified slightly and easier to be implemented.

### Example 3

This example is a comprehensive example. In this example, an MME acquires an access mode of a target cell and/or CSG ID of the target cell from a target base station or a target base station gateway by using dedicated messages, and performs access control on a UE according to the acquired access mode of the target cell and/or CSG ID of the target cell.

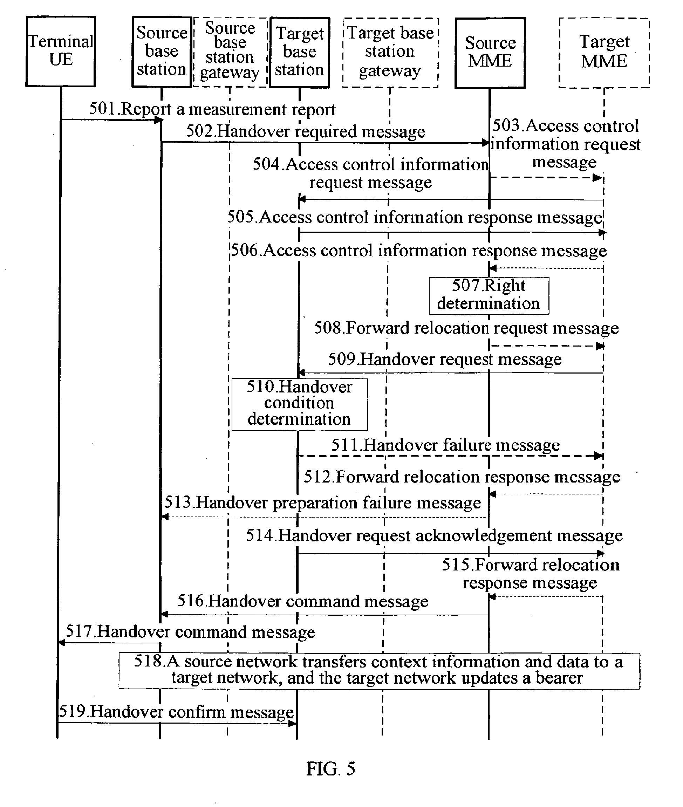

Referring to FIG. 5, a schematic flowchart of a method for implementing handover control according to Example 3 is provided. The method includes the following steps.

Step 501: The UE reports a measurement report to a source base station.

If a measurement report reporting condition is satisfied, the UE sends the measurement report to the source base station, in which the measurement report includes a measurement result. The measurement result may include ID information of the measured target cell and values of various parameters measuring signal quality.

Step 502: The source base station sends a handover required message to a source MME.

The handover required message may carry the following information: a handover type, a handover reason, a target ID, a transparent container from the source base station to the target base station, and a selected location area ID. The target ID may be a target base station ID. The transparent container may include information such as a target cell ID.

Moreover, if the MME needs to be relocated, the procedure proceeds to step 503. If the MME does not need to be relocated, the source MME and a target MME in the following are the same entity, messages interacted between the source MME and the target MME are omitted, and the procedure proceeds to step 504.

Step 503: The source MME sends an access control information request message to the target MME.

The access control information request message may carry the following information: the transparent container from the source base station to the target base station and the target base station ID.

Furthermore, the source MME can determine whether access control information needs to be acquired at first. If the access control information needs to be acquired at first, the source MME sends the access control information request message to the target MME. If the access control information does not need to be acquired at first, the handover process is performed according to the process of handover to an ordinary cell. For example, the source MME can determine whether the access control information needs to be acquired according to handover type information carried in the handover required message. If the handover type indicates the handover to a CSG cell, the access control information needs to be acquired. If the handover type indicates the handover to an ordinary cell, the access control information does not need to be acquired. The access control information may be the access mode of the target cell and/or CSG ID of the target cell.

Step 504: The target MME sends an access control information request message to the target base station or the target base station gateway.

Step 505: The target base station or the target base station gateway sends an access control information response message to the target MME.

The target base station or the target base station gateway can send the access control information response message to the target MME after receiving the access control information request message, in which the access control information response message may carry the access mode of the target cell and/or CSG ID of the target cell.

Moreover, if the MME is relocated, the procedure proceeds to step 506. If the MME does not need to be relocated, the source MME and a target MME are the same entity, messages interacted between the source MME and the target MME are omitted, and the procedure proceeds to step 507.

Step 506: The target MME sends the access control information response message to the source MME.

Step 507: The source MME determines whether the UE has the right to access the target cell.

According to a CSG access control rule, if the source MME detects that the received access mode of the target cell is a closed mode, the source MME further detects whether a CSG list of the UE has a record matching the received CSG ID of the target cell. If the CSG list of the UE has the record matching the received CSG ID of the target cell, it can be considered that the UE has the right to access the target cell, the procedure proceeds to step 508. If the CSG list of the UE has no record matching the received CSG ID of the target cell, it can be considered that the UE has no right to access the target cell, the procedure proceeds to step 513.

If the source MME detects that the access mode of the target cell reported by the UE is a non-closed mode (for example, an open mode or a hybrid mode), the procedure proceeds to step 508.

Step 508: The source MME sends a forward relocation request message to the target MME.

The forward relocation request message may carry the following information: a mobility management context of the UE, the transparent container from the source base station to the target base station, and the target base station ID.

Step 509: The target MME sends a handover request message to the target base station.

The handover request message may include the handover type, the handover reason, a bearer list required to be established, and the transparent container from the source base station to the target base station.

Optionally, the target MME can also acquire the access control information from the target base station or the target base station gateway and determine an access right of the UE according the acquired access control information and the CSG access control rule.

For example, if the access right of the UE is determined by the target MME, then in step 503, after the source MME sends the forward relocation request message to the target MME, the target MME sends the access control information request message to the target base station or the target base station gateway, receives the access control information response message carrying the access control information and sent by the target base station or the base station gateway, and determines the access right of the UE. If the UE has the right to access the target cell, the target MME can send the handover request message to the target base station or the target base station gateway. If the UE has no right to access the target cell, the target MME can send a forward relocation response message to the source MME directly, in which the message may carry a handover failure reason.

Step 510: The target base station determines whether the UE satisfies a handover condition.

The target base station determines whether the handover condition is satisfied, for example, whether current resources are adequate, according to a handover preparation rule. If the handover condition is not satisfied, the procedure proceeds to step 511. If the handover condition is satisfied, the procedure proceeds to step 514.

Step 511: The target base station sends a handover failure message to the target MME.

If the target base station determines that the UE does not satisfy the handover condition currently, the target base station can send the handover failure message to the target MME. The handover failure message may carry the handover failure reason, such as inadequate resources.

Moreover, if the MME is relocated, the procedure proceeds to step 512. If the MME is not relocated, the source MME and the target MME are the same entity, messages interacted between the source MME and the target MME are omitted, and the procedure proceeds to step 513.

Step 512: The target MME sends the forward relocation response message to the source MME.

If the target MME receives the handover failure message sent by the target base station, the forward relocation response message may carry the handover failure reason, and the procedure proceeds to step 513.

Step 513: The source MME sends the handover preparation failure message to the source base station or a source base station gateway.

The handover preparation failure message may carry the handover failure reason, and this handover process ends. After receiving the handover preparation failure message, the source base station can reselect a target cell for the UE and start the handover process again.

Step 514: The target base station sends a handover request acknowledge message to the target MME.

If it is determined that the handover condition is satisfied, the target base station prepares corresponding resources and can send the handover request acknowledge message to the target MME. The handover request acknowledge message may include the following information: the handover type, the bearer list that is established successfully, and the bearer list that fails to be established.

Optionally, if the target base station gateway exists, the target base station gateway can also determine whether the UE satisfies the handover condition currently.

Moreover, if the MME is relocated, the procedure proceeds to step 515. If the MME is not relocated, the source MME and the target MME are the same entity, messages interacted between the source MME and the target MME are omitted, and the procedure proceeds to step 516.

Step 515: The target MME sends the forward relocation response message to the source MME.

If the target MME receives the handover request acknowledge message sent by the target base station, the forward relocation response message may include the following information: the bearer list established successfully and a transparent container from the target base station to the source base station.

Step 516: The source MME sends a handover command message to the source base station. Step 517: The source base station sends the handover command message to the UE.

Step 518: A source network transfers context information and data to a target network, and the target network updates a bearer.

Step 519: The UE is synchronized to the target cell and sends a handover confirm message to the target base station.

If a location area ID of the target cell is not in a location area ID list saved by the UE, the UE can also initiate location area updating, for example, TAU.

After the UE is handed over to the target cell successfully, the source network can delete the context of the UE and the temporary bearer.

it can be seen that, in this example, when a terminal performs cell handover, the MME performs the access control on the terminal according to the access mode of the target cell and/or CSG ID of the target cell, so that the terminal can be handed over to the target cell that the terminal has the right to access, charging loss of an operator can be avoided as far as possible, and the terminal can initiate a second service in the target cell after being handed over to the target cell.

Furthermore, access control information used for the MME to perform the access control is stored by the target base station or the target base station gateway. Therefore, the access control information is authentic and effective, thereby ensuring the effectiveness of the handover.

### Example 4

This example is a comprehensive example. In this example, a UE initiates a TAU process after being synchronized to a target cell, and an MME performs access control on the UE according to a corresponding rule in the TAU process.

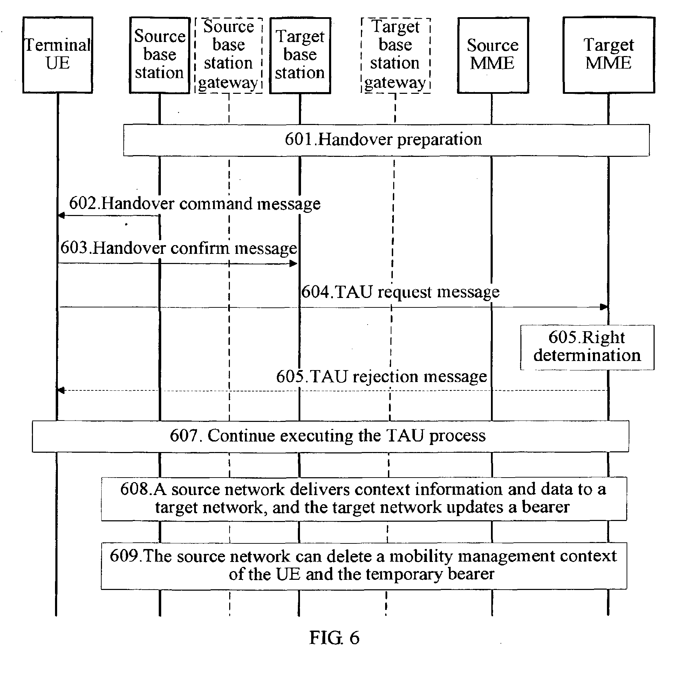

Referring to FIG. 6, a schematic flowchart of a method for implementing handover control according to Example 4 is provided. The method includes the following steps.

Step 601: Perform a standard handover preparation process.

If a measurement report reporting condition is satisfied, the UE sends a measurement report to a source base station, and then the source base station selects the target cell and performs the standard handover preparation process.

Step 602: The source base station sends a handover command message to the UE.

After handover preparation succeeds, the source base station sends the handover command message to the UE.

Step 603: The UE is synchronized to the target cell and sends a handover confirm message to a target base station.

After being synchronized to the target cell, the UE can acquire information about an access mode of the target cell and/or CSG ID of the target cell from the target base station.

Step 604: The UE sends a TAU request message to a target MME.

The information carried in the TAU request message includes: the access mode of the target cell and/or CSG ID of the target cell.

Step 605: The target MME determines whether the UE has the right to access the target cell.

During the handover preparation, the target MME can acquire a mobility management context of the UE.

According to a CSG access control rule, if the target MME detects that the received access mode of the target cell is a closed mode, the target MME further detects whether a CSG list of the UE has a record matching the received CSG ID of the target cell. If the CSG list of the UE has no record matching the received CSG ID of the target cell, it can be considered that the UE has no right to access the target cell, the procedure proceeds to step 605. If the CSG list of the UE has the record matching the received CSG ID of the target cell, it can be considered that the UE has the right to access the target cell, the procedure proceeds to step 607.

If the source MME detects that the access mode of the target cell reported by the UE is a non-closed mode (for example, an open mode or a hybrid mode), it can be considered that the UE has the right to access the target cell, and the procedure proceeds to step 607.

Step 606: The target MME sends a TAU rejection message.

The TAU rejection message may carry a rejection reason and indicate that the rejection reason is that a user has no right to access the target cell, and the procedure ends.

Step 607: Continue executing the TAU process.

If it is determined that the UE has the right to access the target cell, the TAU process continues to be executed.

Step 608: A source network transfers context information and data to a target network, and the target network updates a bearer.

Step 609: The source network can delete the context of the UE and the temporary bearer.

It can be seen that, in this example, after a terminal is synchronized to the target cell, the MME performs the access control on the terminal by using the TAU process. If the terminal has no right to access the target cell, current services of the terminal in the target cell can be forcibly interrupted. Therefore, charging loss of an operator can be avoided as far as possible.

Furthermore, it is easier to adopt the TAU process to perform the access control.

### Example 5

In this example, a UE is handed over between different CSG cells in the same base station, and an MME performs access control on the UE according to an access mode of a target cell and/or CSG ID of a target cell.

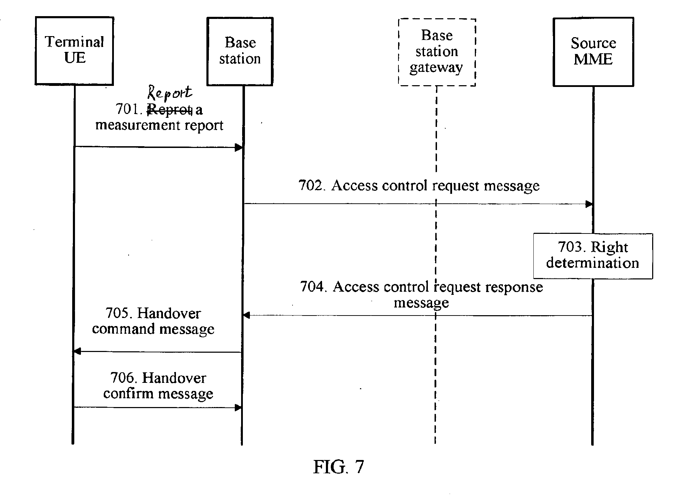

Referring to FIG. 7, a schematic flowchart of a method for implementing handover control according to example 5 is provided. The method includes the following steps.

Step 701: The UE reports a measurement report to the base station.

If a measurement report reporting condition is satisfied, the UE sends the measurement report to the base station, in which the measurement report includes a measurement result. The measurement result may include ID information of the measured target cell and values of various parameters measuring signal quality.

Step 702: The base station sends an access control request message to the MME.

Preferably, the base station selects a cell that satisfies a handover preparation condition (adequate resources) as the target cell. The information carried in the access control request message may include: the access mode of the target cell and/or CSG ID of the target cell.

Preferably, the base station can detect the access mode of the target cell first. If the access mode of the target cell is a closed mode, the information carried in the access control request message may include only the CSG ID of the target cell. If the base station detects that the access mode of the target cell is a non-closed mode, it can be considered that the UE has the right to access the target cell, and the procedure proceeds to step 705.

Step 703: The MME determines whether the UE has the right to access the target cell.

For example, according to a CSG access control rule, if the MME detects that the received access mode of the target cell is the closed mode, the MME further detects whether a CSG list of the UE has a record matching the received CSG ID of the target cell. If the CSG list of the UE has the record matching the received CSG ID of the target cell, it can be considered that the UE has the right to access the target cell. If the CSG list of the UE has no record matching the received CSG ID of the target cell, it can be considered that the UE has no right to access the target cell.

If the source MME detects that the access mode of the target cell reported by the UE is a non-closed mode (for example, an open mode or a hybrid mode), it can be considered that the UE has no right to access the target cell.

If the MME receives only the CSG ID of the target cell, the access mode of the target cell is the closed mode by default. Then the MME determines whether the UE has the right to access the target cell based on the closed mode.

Step 704: The MME sends an access control request response message to the base station. If the MME determines that the UE has the right to access the target cell, the information carried in the access control request response message may include information indicating that the UE is allowed to be handed over to the target cell.

If the MME determines that the UE has the right to access the target cell, the information carried in the access control request response message may include a handover failure reason.

Step 705: The base station sends a handover command message to the UE.

If the UE has the right to access the target cell, the base station sends the handover command message to the UE. If the UE has no right to access the target cell, the base station reselects a target cell for the UE and initiates a new handover process.

Step 706: The UE is synchronized to the target cell and sends a handover confirm message to the base station.

It can be seen that, in this example, when a terminal performs cell handover, the MME performs the access control on the terminal according to the access mode of the target cell and/or CSG ID of the target cell, so that the terminal can be effectively handed over to the target cell that the terminal has the right to access, charging loss of an operator can be avoided as far as possible, and the terminal can initiate a second service in the target cell after being handed over to the target cell.

Furthermore, access control information used for the MME to perform the access control is stored by the base station or a base station gateway. Therefore, the access control information is authentic and effective, thereby ensuring the effectiveness of the handover between different cells of the same base station.

It can be understood that, in the above examples, part or all of messages interacted between entities can be forwarded through an intermediate device.

### Example 6

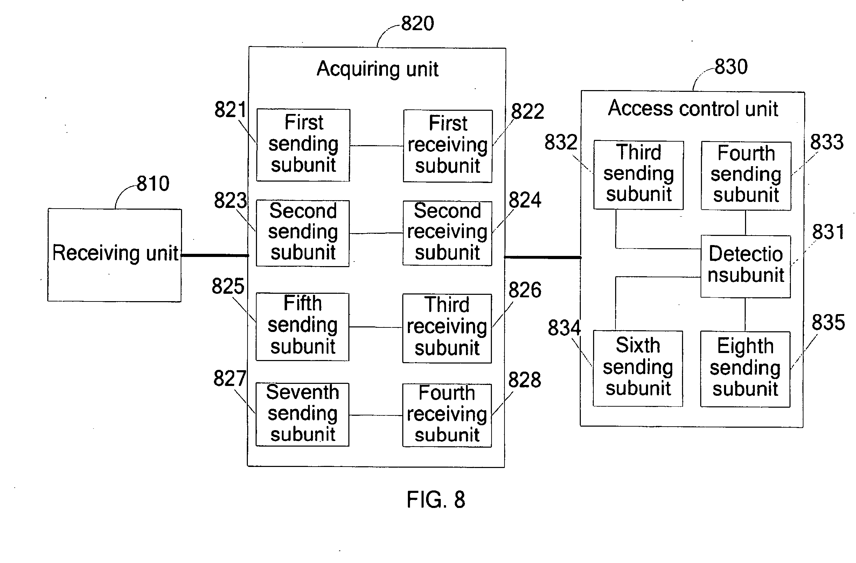

Accordingly, an example further provides an MME. Referring to FIG. 8, a schematic diagram of the MME according to Example 6 is provided. The MME may include a receiving unit 810, an acquiring unit 820, and an access control unit 830.

The receiving unit 810 is configured to receive a first handover message, in which the first handover message carries an ID of a target cell that a terminal prepares to be handed over to, and the target cell is a CSG cell.

The first handover message received by the receiving unit 810 may be a handover required message or a forward relocation request message.

The acquiring unit 820 is configured to acquire information about an access mode of the target cell and/or CSG ID of the target cell stored by a target base station or a target base station gateway.

The acquiring unit 820 can acquire the information by any means, for example, by using messages in a handover process in the prior art or dedicated messages.

The access control unit 830 is configured to perform access control on the terminal according to the access mode of the target cell and/or CSG ID of the target cell.

The access control unit 830 can perform the access control on the terminal according to the access mode of the target cell and/or CSG ID of the target cell and a CSG access control rule. If the terminal has the right to access the target cell, handover of the terminal is allowed. If the terminal has no right to access the target cell, the handover process can be terminated.

For example, if the receiving unit 810 is specifically configured to receive the handover required message or the forward relocation request message, the acquiring unit 820 may include a first sending subunit 821 and a first receiving subunit 822.

The first sending subunit 821 is configured to send a handover request message to the target base station or the target base station gateway.

For example, the first sending subunit 821 can send the handover request message to the target base station or the target base station gateway through an intermediate device.

The first receiving subunit 822 is configured to receive a handover request acknowledge message sent by the target base station or the target base station gateway, in which the handover request acknowledge message carries the access mode of the target cell and/or CSG ID of the target cell stored by the target base station or the target base station gateway.

For example, the first receiving subunit 822 can receive the handover request acknowledge message sent by the target base station or the target base station gateway through an intermediate device.

For example, if the receiving unit 810 is specifically configured to receive the handover required message and an MME needs to be relocated, the acquiring unit 820 may further include a second sending subunit 823 and a second receiving subunit 824.

The second sending subunit 823 is configured to send a forward relocation response message to a target MME.

The second receiving subunit 824 is configured to receive a forward relocation response message send by the target MME, in which the forward relocation response message carries the access mode of the target cell and/or CSG ID of the target cell stored by the target base station or the target base station gateway.

The access control unit 830 may include a detection subunit 831, a third sending subunit 832, and a fourth sending subunit 833.

The detection subunit 831 is configured to detect whether a CSG list accessible to the terminal has a record matching the CSG ID of the target cell after finding that the access mode of the target cell acquired by the acquiring unit is a closed mode.

The third sending subunit 832 is configured to send a handover command message to a source base station or a source base station gateway if the detection subunit 831 detects a matching record.

The fourth sending subunit 833 is configured to send a handover preparation failure message to the source base station or the source base station gateway if the detection subunit 831 detects no matching record, in which the handover preparation failure message carries information indicating handover failure.

For example, if the receiving unit 810 is specifically configured to receive the handover required message or the forward relocation request message, the acquiring unit 820 may further include a fifth sending subunit 825 and a third receiving subunit 826.

The fifth sending subunit 825 is configured to send an access control information request message to the target base station or the target base station gateway.

For example, the fifth sending subunit 825 can send the access control information request message to the target base station or the target base station gateway through an intermediate device.

The third receiving subunit 826 is configured to receive an access control information response message sent by the target base station or the target base station gateway, in which the access control information response message carries the access mode of the target cell and/or CSG ID of the target cell stored by the target base station or the target base station gateway.

For example, the third receiving subunit 826 can receive the access control information response message sent by the target base station or the target base station gateway through an intermediate device.

The access control unit 830 may further include a detection subunit 831, a fourth sending subunit 833, and a sixth sending subunit 834.

The sixth sending subunit 834 is configured to send the handover request message to the target base station or the target base station gateway if the detection subunit 831 detects a matching record.

For example, if the receiving unit 810 is specifically configured to receive the handover required message, but the MME needs to be relocated, the acquiring unit 820 may further include a seventh sending subunit 827 and a fourth receiving subunit 828. '

The seventh sending subunit 827 is configured to send the access control information request message to the target MME.

The fourth receiving subunit 828 is configured to receive the access control information response message sent by the target MME, in which the access control information response message carries the access mode of the target cell and/or CSG ID of the target cell stored by the target base station or the target base station gateway.

The access control unit may further include a detection subunit 831, a fourth sending subunit 833, and an eighth sending subunit 835.

The eighth sending subunit 835 is configured to send a forward relocation request message to the target MME if the detection subunit 831 detects a matching record.

It can be understood that, the function of each module of the MME in this example can be implemented through the methods described in Embodiment 2, and examples 2 to 5.

### Example 7

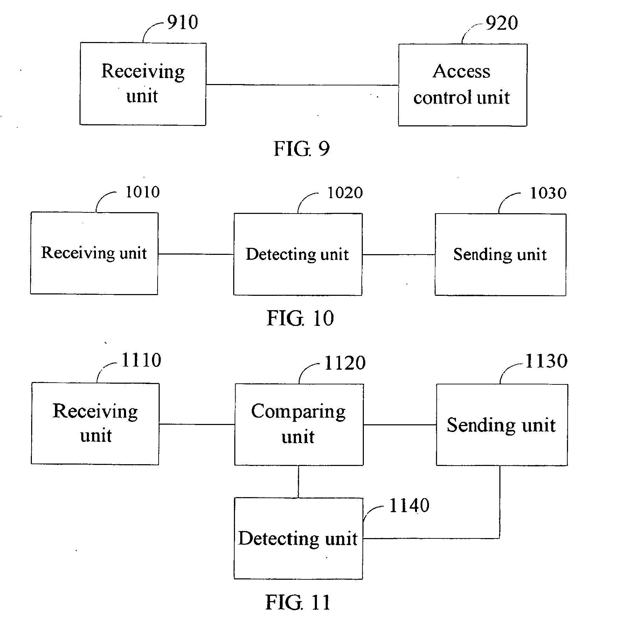

Accordingly, an Example further provides an MME. Referring to FIG. 9, a schematic diagram of the MME according to example 7 is provided. The MME may include a receiving unit 910 and an access control unit 920.

The receiving unit 910 is configured to receive a TAU request message, in which the TAU request message is sent by a terminal after the terminal is synchronized to a target cell, the TAU request message carries an access mode of the target cell and/or CSG ID of the target cell, and the target cell is a CSG cell.

For example, the receiving unit 910 can receive the TAU request message sent by the terminal through a base station or a base station gateway.

The access control unit 920 is configured to perform access control on the terminal according to information carried in the TAU request message.

It can be understood that, the function of each module of the MME in this example can be implemented through the method described in Example 6.

### Example 8

Accordingly, an example further provides an MME. Referring to FIG. 10, a schematic diagram of the MME according to Example 8 is provided. The MME may include a receiving unit 1010, a detecting unit 1020, and a sending unit 1030.

The receiving unit 1010 is configured to receive an access control request message sent by a base station or a base station gateway, in which the access control request message carries an ID of a target cell that a terminal prepares to be handed over to and an access mode of the target cell and/or CSG ID of the target cell, and the target cell is a CSG cell in a current cell base station.

The detecting unit 1020 is configured to detect whether a CSG list accessible to the terminal has a record matching the CSG ID of the target cell after finding that the access mode of the target cell is a closed mode.

The sending unit 1030 is configured to send an access control request response message to the base station or the base station gateway if the detecting unit 1020 detects a matching record, in which the access control request response message carries information indicating that a handover is allowed.

The sending unit 1030 is further configured to send an access control request response message to the base station or the base station gateway if the detecting unit 1020 detects no matching record, in which the access control request response message carries information indicating handover failure, and the information indicates that the terminal has no right to access the target cell.

It can be understood that, the function of each module of the MME in this example can be implemented through the method described in example 5.

### Embodiment 3

Accordingly, an embodiment of the present invention further provides an access network device. Referring to FIG. 11, a schematic diagram of the access network device according to Embodiment 3 is provided. The access network device may include a receiving unit 1110, a comparing unit 1120, and a sending unit 1130.

The receiving unit 1110 is configured to receive a handover request message, in which the handover request message carries an access mode of a target cell and/or CSG ID of the target cell that a terminal prepares to be handed over to, and the target cell is a CSG cell.

The comparing unit 1120 is configured to compare whether the access mode of the target cell and/or CSG ID of the target cell is the same as an access mode of the target cell and/or CSG ID of the target cell stored by a target base station or a target base station gateway.

The sending unit 1130 is configured to send a handover failure message to an MME if a comparison result of the comparing unit 1120 is that the access mode of the target cell and/or CSG ID of the target cell is different from the access mode of the target cell and/or CSG ID of the target cell stored by the target base station or the target base station gateway, in which the handover failure message carries information indicating handover failure.

The access network device may further include a detecting unit 1140.

The detecting unit 1140 is configured to detect whether the terminal satisfies a handover condition currently according to a handover preparation rule if the comparison result of the comparing unit 1120 is that the access mode of the target cell and/or CSG ID of the target cell is the same as the access mode of the target cell and/or CSG ID of the target cell stored by the target base station or the target base station gateway.

The sending unit 1130 is further configured to send a handover request acknowledge message to the MME if the detecting unit 1140 detects that the terminal satisfies the handover condition currently, or send the handover failure message to the MME if the detecting unit 1140 detects that the terminal does not satisfy the handover condition currently, in which the handover failure message carries information indicating handover failure.

It can be understood that, the access network device in this embodiment may be, but not limited to, a base station or a base station gateway.

It can be understood that, the function of each module of the access network device in this embodiment can be implemented through the method described in Embodiment 3.

Accordingly, an example further provides a communication system. The communication system may include an MME according to Example 6, an MME according to Example 7, an MME according to Example 8, or a base station according to Embodiment 3.

It should be noted that, each embodiment mentioned above is described as a series of action for a brief description. But persons skilled in the art should know that the present invention is not limited to the sequence of the actions, because some steps can be performed in another order or concurrently according to the present invention. Persons skilled in the art should also know that the embodiments in the specification are exemplary embodiments and the actions and modules involved in the embodiments are not necessary in the present invention.

The focuses of the above embodiments and examples are different from each other. For the part that is not described in detail in a certain embodiment or example, the relevant description in other embodiments or examples can be referred to.

Overall, in the technical solutions according to the embodiments of the present invention, when the terminal performs the cell handover, the MME performs the access control on the terminal according to the access mode of the target cell and/or CSG ID of the target cell, so that the terminal can be handed over to the target cell as effectively as possible that the terminal has the right to access, charging loss of an operator can be avoided as far as possible, and the terminal can initiate a second service in the target cell after being handed over to the target cell.

Furthermore, the access control information used for the MME to perform the access control is stored by the target base station or the target base station gateway, or the authenticity of the access control information is verified by the target base station or the target base station gateway, thereby ensuring the effectiveness of the handover. Multiple entities in the system can perform the access control, and the implementation modes are diversified and flexible.

Those of ordinary skill in the art should understand that all or part of the steps of the methods according to the embodiments of the present invention may be implemented by a program instructing relevant hardware. The program may be stored in a computer readable storage medium. The storage medium may include a ROM, a RAM, a magnetic disk, or an optical disk.

The method for implementing handover control, the related apparatus, computer readable storage medium and hardware according to the embodiments of the present invention are described in detail above. The principle and implementation of the present invention are described herein through specific embodiments. The description about the embodiments of the present invention is merely provided for ease of understanding of the method and core ideas of the present invention.

## Claims

1. A method for implementing handover control, **characterized in that** the method comprises:
receiving (210, 305), by a target base station or a target base station gateway, a handover request message sent by a Mobility Management Entity, MME, wherein the handover request message carries a closed subscriber group identity, CSG ID, of a target cell that a user equipment, UE, prepares to be handed over to;
comparing (220, 306), by the target base station or the target base station gateway, whether the CSG ID of the target cell carried in the handover request message is the same as the CSG ID of the target cell stored by the target base station or the target base station gateway;
sending (230, 307), by the target base station or the target base station gateway, a handover failure message to the MME, wherein the handover failure message carries information indicating handover failure, if the CSG ID of the target cell carried in the handover request message is different from the CSG ID of the target cell stored by the target base station or the target base station gateway.

2. The method according to claim 1, wherein the access mode of the target cell is a closed mode.

3. The method according to claim 2, wherein before receiving, by the target base station or the target base station gateway, the handover request message sent by the MME, the method further comprises:
receiving (302), by the MME, the CSG ID of the target cell reported by the UE; and
determining (303), by the MME, whether the UE has the right to access the target cell by detecting whether a CSG list accessible to the UE stored in the MME has a record matching the CSG ID of the target cell reported by the UE,
wherein
the receiving, by the MME, the CSG ID of the target cell reported by the UE, comprises:
receiving (302), by the MME, the CSG ID of the target cell which is carried in a handover required message sent by a source base station, wherein the CSG ID of the target cell is acquired (301) by the source base station through a measurement report including the CSG ID of the target cell reported by the UE.

4. An apparatus for implementing handover control, **characterized in that** the apparatus comprises:
a receiving unit (1110), configured to receive a handover request message sent by a mobility management entity, MME, wherein the handover request message carries a closed subscriber group identity, CSG ID, of a target cell that a user equipment, UE, prepares to be handed over to;
a comparing unit (1120), configured to compare whether the CSG ID of the target cell carried in the handover request message is the same as the CSG ID of the target cell stored by the apparatus;
a sending unit (1130), configured to send a handover failure message to the MME, if a comparison result of the comparing unit (1120) is that the CSG ID of the target cell carried in the handover request message is different from the CSG ID of the target cell stored by the apparatus, wherein the handover failure message carries information indicating handover failure; and
the apparatus is a target base station or a target base station gateway.

5. The apparatus according to claim 4, wherein the access mode of the target cell is a closed mode.

6. A computer readable storage medium storing a program which when run implements the method of any of claims 1-3.

7. A hardware instructed by a program to perform the method of any of claims 1-3.

## Patentansprüche

1. Verfahren zum Implementieren einer Weiterreichungssteuerung, **dadurch gekennzeichnet, dass** das Verfahren Folgendes umfasst:
Empfangen (210, 305), durch eine Ziel-Basisstation oder ein Ziel-Basisstations-Gateway, einer Weiterreichungsanforderungsnachricht, die von einer Mobilitätsmanagement-Entität, MME, gesendet wurde, wobei die Weiterreichungsanforderungsnachricht eine Kennung einer geschlossenen Benutzergruppe, CSG ID, einer Zielzelle transportiert, in die weitergereicht zu werden sich eine Benutzereinrichtung, UE, vorbereitet;
Vergleichen (220, 306), durch die Ziel-Basisstation oder das Ziel-Basisstations-Gateway, ob die CSG ID der Zielzelle, die in der Weiterreichungsanforderungsnachricht transportiert wird, identisch ist mit der CSG ID der Zielzelle, die von der Ziel-Basisstation oder dem Ziel-Basisstations-Gateway gespeichert wird;
Senden (230, 307), durch die Ziel-Basisstation oder das Ziel-Basisstations-Gateway, einer Weiterreichungsfehlermeldung an die MME, wobei die Weiterreichungsfehlermeldung Informationen transportiert, die ein Fehlschlagen des Weiterreichens anzeigen, wenn die CSG ID der Zielzelle, die in der Weiterreichungsanforderungsnachricht transportiert wird, von der CSG ID der Zielzelle verschieden ist, die von der Ziel-Basisstation oder dem Ziel-Basisstations-Gateway gespeichert wird.

2. Verfahren nach Anspruch 1, wobei der Zugangsmodus der Zielzelle ein geschlossener Modus ist.

3. Verfahren nach Anspruch 2, wobei vor dem Empfangen der von der MME gesendeten Weiterreichungsanforderungsnachricht durch die Ziel-Basisstation oder das Ziel-Basisstations-Gateway das Verfahren ferner Folgendes umfasst:
Empfangen (302), durch die MME, der von der UE gemeldeten CSG ID der Zielzelle; und
Bestimmen (303), durch die MME, ob die UE zum Zugang zu der Zielzelle berechtigt ist, indem festgestellt wird, ob eine für die UE zugängliche, in der MME gespeicherte CSG-Liste einen Datensatz enthält, der der von der UE gemeldeten CSG ID der Zielzelle entspricht,
wobei
das Empfangen, durch die MME, der von der UE gemeldeten CSG ID der Zielzelle Folgendes umfasst:
Empfangen (302), durch die MME, der CSG ID der Zielzelle, die in einer Weiterreichungsanforderungsnachricht transportiert wird, die von einer Quell-Basisstation gesendet wird, wobei die CSG ID der Zielzelle von der Quell-Basisstation anhand eines Messberichts bezogen (301) wird, der die von der UE gemeldete CSG ID der Zielzelle enthält.

4. Vorrichtung zum Implementieren einer Weiterreichungssteuerung, **dadurch gekennzeichnet, dass** die Vorrichtung Folgendes umfasst:
eine Empfangseinheit (1110), die dafür ausgelegt ist, eine Weiterreichungsanforderungsnachricht zu empfangen, die von einer Mobilitätsmanagement-Entität, MME, gesendet wurde, wobei die Weiterreichungsanforderungsnachricht eine Kennung einer geschlossenen Benutzergruppe, CSG ID, einer Zielzelle transportiert, in die weitergereicht zu werden sich eine Benutzereinrichtung, UE, vorbereitet;
eine Vergleichseinheit (1120), die dafür ausgelegt ist zu vergleichen, ob die CSG ID der Zielzelle, die in der Weiterreichungsanforderungsnachricht transportiert wird, identisch ist mit der CSG ID der Zielzelle, die von der Vorrichtung gespeichert wird;
eine Sendeeinheit (1130), die dafür ausgelegt ist, eine Weiterreichungsfehlermeldung an die MME zu senden, wenn ein Vergleichsergebnis der Vergleichseinheit (1120) besagt, dass die CSG ID der Zielzelle, die in der Weiterreichungsanforderungsnachricht transportiert wird, von der CSG ID der Zielzelle verschieden ist, die von der Vorrichtung gespeichert wird, wobei die Weiterreichungsfehlermeldung Informationen transportiert, die ein Fehlschlagen des Weiterreichens anzeigen; und
die Vorrichtung eine Ziel-Basisstation oder ein Ziel-Basisstations-Gateway ist.

5. Vorrichtung nach Anspruch 4, wobei der Zugangsmodus der Zielzelle ein geschlossener Modus ist.

6. Computerlesbares Speichermedium, auf dem ein Programm gespeichert ist, das, wenn es ausgeführt wird, das Verfahren nach einem der Ansprüche 1-3 implementiert.

7. Eine Hardware, die von einem Programm angewiesen wird, das Verfahren nach einem der Ansprüche 1-3 auszuführen.

## Revendications

1. Procédé de mise en oeuvre d'une commande de transfert, **caractérisé en ce que** le procédé comprend :
la réception (210, 305), par une station de base cible ou une passerelle de station de base cible, d'un message de demande de transfert envoyé par une Entité de Gestion de Mobilité, MME (Mobility Management Entity), dans lequel le message de demande de transfert achemine un identifiant de groupe d'abonnés fermé, ID de CSG (Closed Subscriber Group Identity), d'une cellule cible vers laquelle un équipement utilisateur, UE (User Equipment), se prépare à être transféré,
la comparaison (220, 306), par la station de base cible ou la passerelle de station de base cible, du fait de savoir si l'ID de CSG de la cellule cible acheminé dans le message de demande de transfert est identique à l'ID de CSG de la cellule cible stocké par la station de base cible ou la passerelle de station de base cible ;
l'envoi (230, 307), par la station de base cible ou la passerelle de station de base cible, d'un message d'échec du transfert à la MME, dans lequel le message d'échec du transfert achemine des informations indiquant un échec du transfert si l'ID de CSG de la cellule cible acheminé dans le message de demande de transfert est différent de l'ID de CSG de la cellule cible stocké par la station de base cible ou la passerelle de station de base cible.

2. Procédé selon la revendication 1, dans lequel le mode d'accès de la cellule cible est un mode fermé.

3. Procédé selon la revendication 2, dans lequel, avant la réception par la station de base cible ou la passerelle de station de base cible, du message de demande de transfert envoyé par la MME, le procédé comprend en outre :
la réception (302), par la MME, de l'ID de CSG de la cellule cible signalé par l'UE ; et
la détermination (303), par la MME, du fait de savoir si l'UE a le droit d'accéder à la cellule cible en détectant si une liste de CSG accessible à l'UE et stockée dans la MME contient un enregistrement correspondant à l'ID de CSG de la cellule cible signalé par l'UE,
dans lequel
la réception, par la MME, de l'ID de CSG de la cellule cible signalé par l'UE, comprend :
la réception (302), par la MME, de l'ID de CSG de la cellule cible qui est acheminé dans un message de demande de transfert envoyé par une station de base source, dans lequel l'ID de CSG de la cellule cible est acquis (301) par la station de base source au moyen d'un signalement de mesure contenant l'ID de CSG de la cellule cible signalé par l'UE.

4. Appareil destiné à mettre en oeuvre une commande de transfert, **caractérisé en ce que** l'appareil comprend :
une unité de réception (1110), configurée pour recevoir un message de demande de transfert envoyé par une entité de gestion de mobilité, MME, dans lequel le message de demande de transfert achemine un identifiant de groupe d'abonnés fermé, ID de CSG, d'une cellule cible vers laquelle un équipement utilisateur, UE, se prépare à être transféré ;
une unité de comparaison (1120), configurée pour comparer le fait de savoir si l'ID de CSG de la cellule cible acheminé dans le message de demande de transfert est identique à l'ID de CSG de la cellule cible stocké par l'appareil ;
une unité d'envoi (1130), configurée pour envoyer un message d'échec du transfert à la MME, si un résultat de comparaison de l'unité de comparaison (1120) est que l'ID de CSG de la cellule cible acheminé dans le message de demande de transfert est différent de l'ID de CSG de la cellule cible stocké par l'appareil, dans lequel le message d'échec du transfert achemine des informations indiquant un échec du transfert ; et
l'appareil est une station de base cible ou une passerelle de station de base cible.

5. Appareil selon la revendication 4, dans lequel le mode d'accès de la cellule cible est un mode fermé.

6. Support de stockage lisible par ordinateur stockant un programme qui, lorsqu'il est exécuté, met en oeuvre le procédé selon l'une quelconque des revendications 1 à 3.

7. Matériel recevant d'un programme une instruction pour mettre en oeuvre le procédé selon l'une quelconque des revendications 1 à 3.
